Europäisches Patentamt

European Patent Office

Office européen des brevets

(11) Publication number: 0 326 001
A2

(12) **EUROPEAN PATENT APPLICATION**

(21) Application number: 89100755.1

(22) Date of filing: 18.01.89

(51) Int. Cl.⁴: **B23D 33/00** , **B21D 43/28**

(30) Priority: 28.01.88 US 149608

(43) Date of publication of application:
02.08.89 Bulletin 89/31

(84) Designated Contracting States:
DE FR IT

(71) Applicant: PEDDINGHAUS CORPORATION a
Corporation under the laws of the State
Delaware
300 North Washington Avenue
Bradley Illinois 60915(US)

(72) Inventor: Magnuson, James A.
595 South Main Avenue
Kankakee Illinois 60901(US)
Inventor: Kempen, Kirk A.
57 Hilltop Drive
Bourbonnais Illinois 60914(US)

(74) Representative: Hoeger, Stellrecht & Partner
Uhlandstrasse 14 c
D-7000 Stuttgart 1(DE)

(54) Workpiece handling system for reduced length segment production.

(57) An apparatus and method are provided for con-
veying workpieces to, through, and from a shearing
machine. The shearing machine is located between
an entry conveyor and an exit conveyor. A hold-
down assembly is associated with the entry con-
veyor and another hold-down assembly is associated
with the exit conveyor. Both hold-down assemblies
include feedback means for measuring the advance-
ment of a workpiece on the conveyors. Each hold-
down assembly is movable between a lowered, en-
gaged position and a raised, disengaged position. A
slippable torque transmitting belt assembly is pro-
vided with each hold-down assembly for operating
the feedback device on the assembly when the hold-
down assembly is in the elevated, disengaged posi-
tion.

# WORKPIECE HANDLING SYSTEM FOR REDUCED LENGTH SEGMENT PRODUCTION

## TECHNICAL FIELD

This invention relates to apparatus for conveying a workpiece to a machine that shears, cuts, or otherwise separates one or more shorter lengths or sections from the workpiece and for conveying the separated sections to desired downstream locations for storage along the side of the conveyor. The invention is particularly applicable for use with a shearing machine that shears steel reinforcing bars or rods of the kind used for concrete reinforcement and which are commonly known as "rebar."

## BACKGROUND OF THE INVENTION AND TECHNICAL PROBLEMS POSED BY THE PRIOR ART

Some steel warehouses have the storage capacity for long rods of varying diameters for use as rebar. Typically, such rebar has a diameter ranging from 0.25 inch to 2.25 inch. The rebar is usually stocked in 60 ft. lengths, and the warehouses have facilities for cutting the 60 ft. lengths of rebar to smaller lengths as may be required by a customer.

Such warehouses may employ shearing machines and conveyor systems which are operated to minimize the waste in cutting the 60 ft. lengths of rebar. To this end, computer programs have been developed and provided to the warehouses for use in determining how the 60 ft. lengths of rebar should be cut to provide the various shorter sections required by a customer, or required by a number of customers, so as to minimize the scrap or unused portions of the 60 ft. lengths of rebar. Such programs are sometimes known as "nesting programs."

The warehouses typically employ a feeder or entry conveyor for feeding the 60 ft. lengths of rebar to the shearing machine and employ an exit conveyor for carrying the cut lengths of rebar to various downstream positions where the cut lengths of rebar are dumped from the conveyor into storage bins.

Such conventional systems typically employ vertically reciprocatable stop members in the exit conveyor. A stop member can be elevated into the exit conveyor path to stop the rebar, before it is sheared, at the desired location relative to the shearing machine. In some systems, the shearing machine and/or conveyors are movable relative to the rebar.

After the length of rebar is sheared, the stop member is retracted downwardly below the exit conveyor, and the sheared section is conveyed along the conveyor toward the receiving bin associated with that particular rebar section. Another mechanical stop is elevated into the conveyor path at the appropriate receiving bin to terminate the conveying movement of the rebar section, and the section is then moved into the receiving bin by conventional unloading mechanisms associated with the conveyor.

In view of the large number of different lengths of rebar that are required on orders from some customers or that are required in response to orders of many customers, there is a need to provide an improved, more efficient apparatus and method for feeding, shearing, and unloading rebar. Accordingly, it would be desirable to provide a system in which the positioning of the 60 ft. length of raw stock rebar and of the sheared rebar sections occurs at a more rapid pace.

It would also be advantageous if mechanical stop mechanisms in the exit conveyor could be eliminated so as to reduce costs and so as to avoid subjecting the exit conveyor to the impact loading forces normally associated with the use of mechanical stop mechanisms. It would similarly be desirable to reduce costs by eliminating complex mechanisms for moving the entire shearing machine and/or conveyors relative to the rebar.

It would also be beneficial if the speed of operation could be increased without affecting the capability of the system to properly position the 60 ft. length of rebar for being sheared at selected locations and without affecting the capability of the system to properly position the sheared rebar sections along the exit conveyor adjacent the appropriate receiving bins.

Finally, in such an improved system it would be desirable to include means for operating the entry conveyor and the exit conveyor in a way that would permit control with conventional, off-the-shelf, numerical control systems which have heretofore typically been used for controlling the operations of the X-axis and Y-axis of a machine tool, such as a milling machine.

## SUMMARY OF THE INVENTION

A workpiece handling apparatus is provided for use with a shearing machine having a shearing means for shearing a selected length section of the workpiece. The apparatus includes an entry conveyor operatively located at the inlet of the shearing machine for feeding the workpiece into the shearing machine. An exit conveyor is operatively located at the outlet of the shearing machine for feeding the selected section of the workpiece out of the shearing machine.

A rotatable entry member is associated with the entry conveyor for engaging the workpiece and for being rotated by movement of the workpiece on the entry conveyor. The apparatus also includes an entry feedback means responsive to the rotation of the rotatable entry member for registering the position of the workpiece.

There is associated with the exit conveyor a rotatable exit member for engaging the workpiece selected section and for being rotated by the movement of the selected workpiece section on the exit conveyor. An exit feedback means is provided for being responsive to the rotation of the rotatable exit member for registering the position of the selected section.

Finally, a conveyor control means is provided for being responsive to the entry and exit feedback means and for controlling the operation of the entry and exit conveyors to position the workpiece relative to the shearing machine and to position the sheared section along the exit conveyor independently of the remaining length of the workpiece.

A preferred embodiment of the method for handling the workpiece includes the step of advancing the workpiece on the entry conveyor from an initial, first position into the shearing machine while registering the position of the workpiece. In the preferred embodiment of the method, as the leading end of the workpiece advances from the shearing machine onto the exit conveyor, the movement of the leading end is also detected at a location on the exit conveyor and is measured relative to the initial position.

The workpiece is then stopped when the leading end of the workpiece is at a second position at a selected distance from the initial position. The length of the leading end portion of the stopped workpiece extending beyond the shearing machine shear line is the first selected length section that is to be sheared from the workpiece.

After the selected section is sheared from the workpiece, the sheared section is advanced by the exit conveyor, and the advancing position is continuously registered until the sheared section has reached a pre-selected location on the exit conveyor. The pre-selected location may define an unloading station adjacent a storage station so that the section can be immediately unloaded. Alternatively, the pre-selected location may be a position upstream of an unloading station.

Depending upon the length of the next (second) selected section to be sheared from the workpiece, and depending upon the location of the particular storage station for the sheared first section, the remaining length of the workpiece may also be advanced further through the shearing machine at least during a portion of the travel of the first sheared section along the exit conveyor.

Alternatively, depending upon the length of the selected sections and upon the location of the associated storage stations, the remaining length of the workpiece may be held stationary while the first sheared section is conveyed on the exit conveyor to the pre-selected location upstream of the intended storage station. The distance between the intended storage station and the upstream position equals the length of the next selected section to be cut from the workpiece.

The entry conveyor may then be started and operated simultaneously with the exit conveyor. Thus, both the workpiece and the first sheared section advance so as to position the first sheared section at the unloading station adjacent the storage station and to position the next selected section for shearing in the shearing machine. The next selected section is then sheared, and simultaneously the previously sheared first section is unloaded.

It is seen that the apparatus and method of the invention are versatile and efficient. Further, the location of the workpiece can be accurately determined for proper shearing and unloading of the sheared sections. Additionally, with this system, a standard machine tool numerical controller can be used in the linear interpolation mode for driving the entry conveyor (e.g., as the X-axis) and the exit conveyor (e.g., as the Y-axis). The two separate entry and exit conveyors can be operated to act as one even though they are mechanically independent.

Numerous other advantages and features of the present invention will become readily apparent from the following detailed description of the invention, from the claims, and from the accompanying drawings.

BRIEF DESCRIPTION OF THE DRAWINGS

In the accompanying drawings forming part of the specification, in which like numerals are employed to designate like parts throughout the same,

FIGS. 1a-1f are schematic diagrams, in plan view, of the apparatus of the present invention showing the entry conveyor, the shearing machine, and the exit conveyor;

FIG. 2 is a fragmentary, simplified, elevation view of the apparatus;

FIG. 3 is a fragmentary, simplified, plan view of the apparatus;

FIG. 4 is a fragmentary, simplified, enlarged, elevation view of the downstream end of the entry conveyor;

FIG. 5 is an end view of the entry conveyor taken along the plane 5-5 in FIG. 4;

FIG. 6 is an fragmentary, simplified, enlarged, elevation view of the upstream end of the exit conveyor;

FIG. 7 is a cross-sectional view taken generally along the plane 7-7 in FIG. 6; and

FIG. 8 is a fragmentary, end view of the upstream end of the exit conveyor taken generally along the plane 8-8 in FIG. 6.

## DESCRIPTION OF THE PREFERRED EMBODIMENT

While this invention is susceptible of embodiment in many different forms, this specification and the accompanying drawings disclose only one specific form as an example of the use of the invention. The invention is not intended to be limited to the embodiment so described, and the scope of the invention will be pointed out in the appended claims.

The apparatus of this invention is used with certain conventional components and machines the details of which, although not fully illustrated or described, will be apparent to those having skill in the art and an understanding of the necessary functions of such components and machines.

Some of the figures illustrating the embodiment of the apparatus show structural details and mechanical elements that will be recognized by one skilled in the art. However, the detailed descriptions of such elements are not necessary to an understanding of the invention, and accordingly, are not herein presented.

### General Arrangement Of The Apparatus

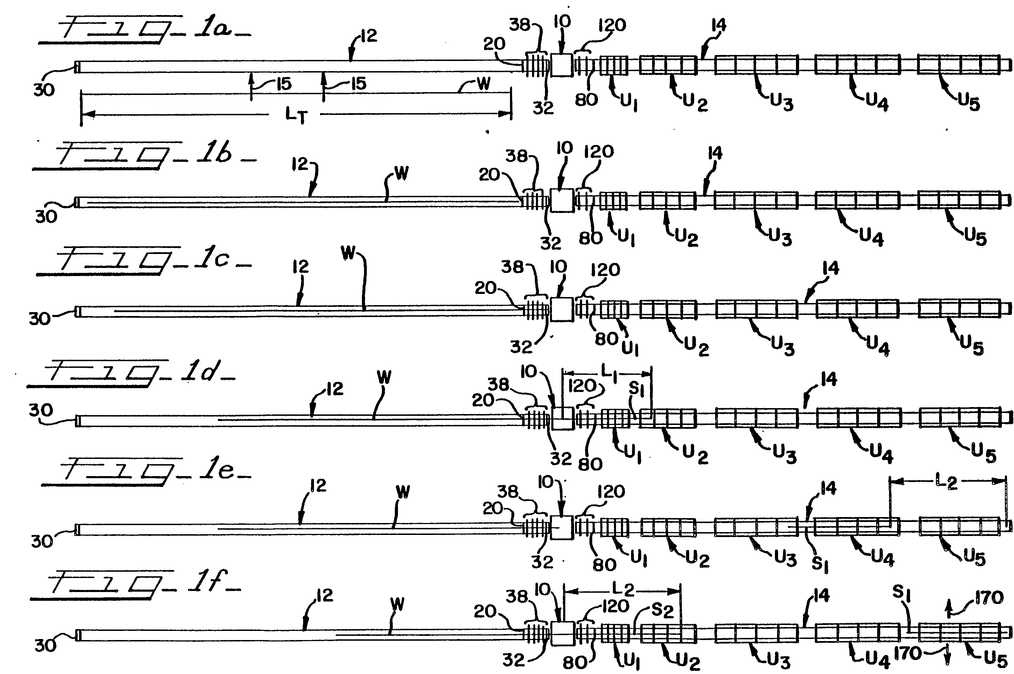

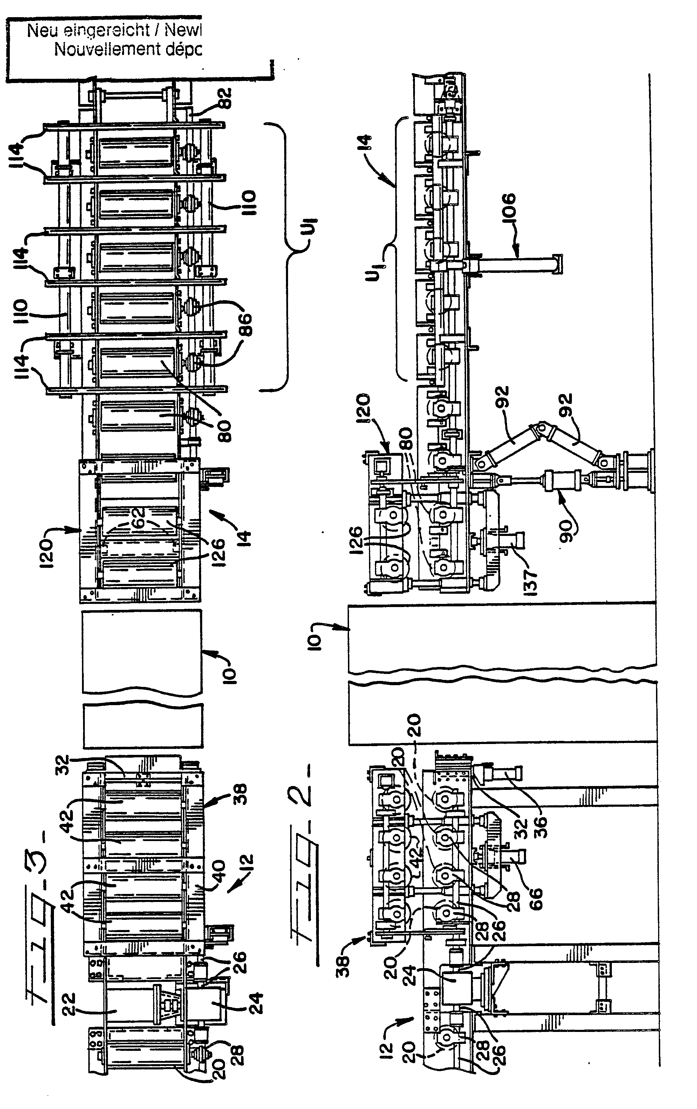

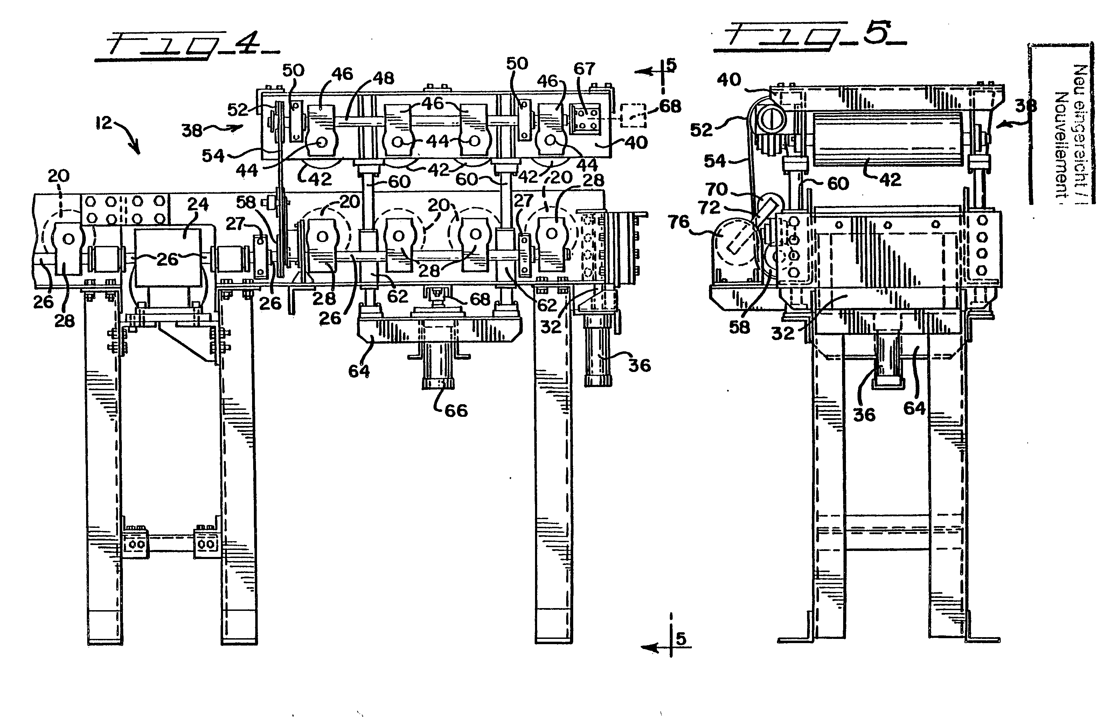

Referring to the drawings, the general arrangement of the apparatus is schematically shown in plan in FIGS. 1a-1f. A more detailed plan view is shown in FIG. 3 and a more detailed elevation view is shown in FIG. 2.

The apparatus is intended to be used with a machine, such as a shearing machine 10, that includes means for severing, cutting, shearing or otherwise separating a selected length section from a longer workpiece W (FIGS. 1a-1f). Conventional shearing machines are disclosed in the U.S. Patent Nos. 3,370,494 and 4,102,228. The details of the shearing machine 10 form no part of the present invention.

The workpiece W, if it is conventional raw stock rebar, may be up to 60 ft. long. It is typically loaded onto an entry conveyor 12 from a storage and loading station adjacent the entry conveyor 12 by transferring the workpiece W laterally in the direction of arrows 15 (FIG. 1a) by means of a suitable loading mechanism (not illustrated). A conventional loading mechanism is described in U.S. Patent No. 3,370,494 and is designated therein by reference numeral 22. The details of the workpiece loading mechanism form no part of the present invention.

The entry conveyor 12 is provided for advancing the workpiece W to and through the shearing machine 10, and an exit conveyor 14 is provided for advancing the sheared, selected section of the workpiece away from the shearing machine 10 to one or more unloading stations $U_1$, $U_2$, $U_3$, $U_4$, and $U_5$. There may be a fewer or greater number of unloading stations, and a storage station or storage bin (not illustrated) is also typically provided adjacent each unloading station $U_1$-$U_5$. One type of conventional storage station or storage bin is described in U.S. Patent No. 3,370,494 where such bins are designated by the reference numeral 40. The details of the unloading mechanisms and storage stations form no part of the present invention.

### The Entry Conveyor

With reference to FIGS. 2-5, the entry conveyor 12 includes a plurality of spaced-apart rollers 20 mounted on a suitable conveyor framework, the details of which form no part of the present invention. The rollers 20 are driven by a conventional electric servo motor 22 (FIG. 3) through a gear reducer drive 24, shafts 26 journaled in bearings 27 mounted to the conveyor framework, and gear drives 28. These components are conventional, and their detailed designs and specific structures form no part of the present invention.

The entry conveyor 12 is provided with an upstream end squaring plate 30 (FIGS. 1a-1f). The downstream end of the entry conveyor 12 is provided with a downstream squaring stop plate 32 (FIGS. 1a-1f and FIGS. 2-5). The squaring stop plate 32 is movable between (1) a retracted, lowered position below the passline of the entry conveyor rollers 20 as illustrated in the figures and (2) a raised position blocking the conveying path (not illustrated).

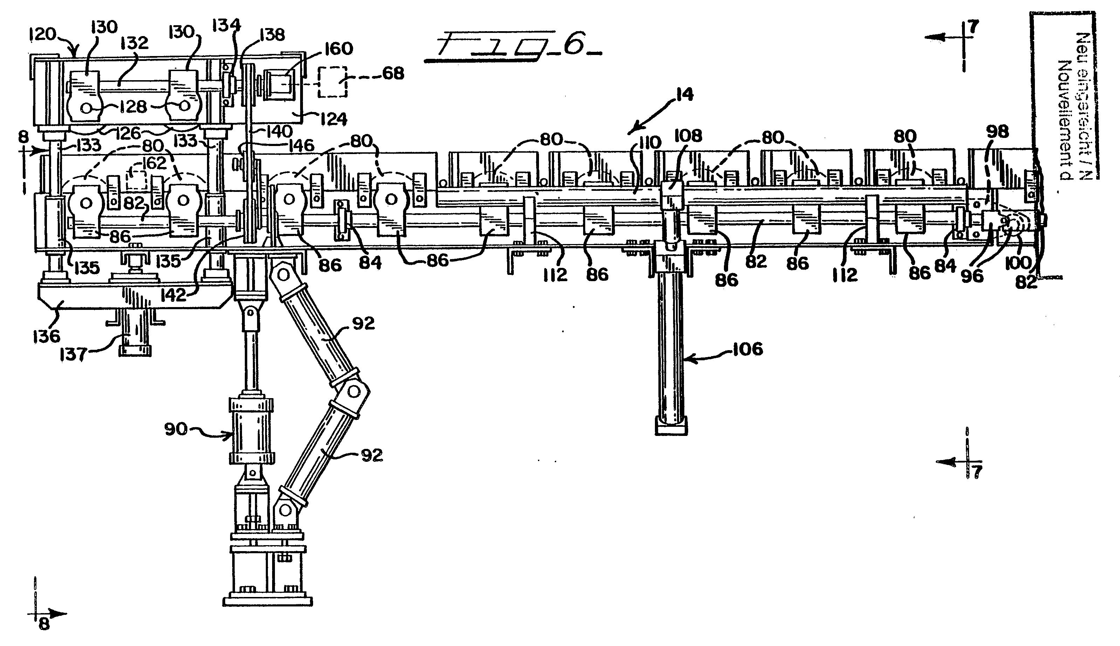

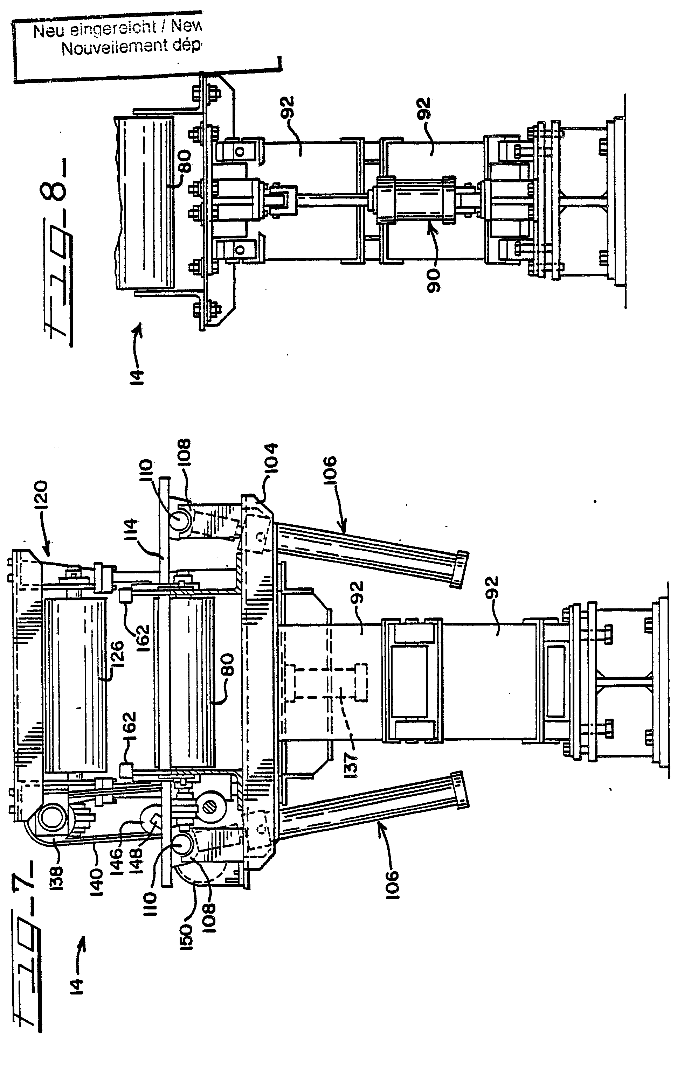

The squaring stop plate 32 is moved between the raised and lowered positions by a pneumatic cylinder-piston actuator 36 (FIGS. 2 and 5) which is suitably mounted to the framework of the entry conveyor 12. The detailed design and specific structure of the squaring stop plate 32 and actuator 36 form no part of the present invention.

Entry Hold-Down Assembly

Mounted to the downstream end of the entry conveyor 12 is an entry hold-down assembly 38. As best illustrated in FIG. 4, the hold-down assembly 38 includes a frame 40 which carries four, spaced-apart, polyurethane-covered, upper rollers 42. Each roller 42 is carried on a driven shaft 44, and each driven shaft 44 is driven through a gear drive 46 by means of another driven shaft 48 which is journaled in bearings 50 mounted to the entry hold-down assembly frame 40.

As best illustrated in FIGS. 4 and 5, a sheave 52 is mounted to one end of the driven shaft 48 and is engaged with a belt 54. The belt 54 is also engaged with a sheave 58 mounted to one of the shafts 26 on the entry conveyor drive system. In this manner, the upper rollers 42 are rotated with the lower rollers 20 on the entry conveyor 12.

As best illustrated in FIGS. 4 and 5, the entry hold-down assembly 38 is mounted to, and above, the entry conveyor 12 on four shafts 60 which are each slidably received in a sleeve 62 (FIG. 4) that is mounted to the entry conveyor framework. The lower, distal end of each shaft 60 is mounted to a transverse frame 64 connected to the cylinder of a pneumatic cylinder-piston actuator 66. The actuator piston rod has an end 68 connected to the entry conveyor framework.

Thus, it is clear that operation of the actuator 66 to extend it will cause the entry hold-down assembly 38 to move downwardly toward the entry conveyor rollers 20 and against a workpiece that may be disposed thereon. Conversely, operation of the actuator 66 to cause its retraction results in the shafts 60 raising the entry hold-down assembly 38 to the illustrated elevated position above the entry conveyor 12.

The actuator 66 thus functions as an entry actuating means for urging the entry hold-down assembly 38, and rollers 42 carried thereon, against the workpiece W. This assures positive contact of the workpiece W with the entry conveyor rollers 20. The entry hold-down assembly 38 operates to bias the workpiece W against the entry conveyor rollers 20 to ensure more positive conveying action and advancement of the workpiece W along the conveyor 12.

In addition, the entry hold-down assembly 38 is employed in registering the position of the workpiece W. To this end, it is recognized that the entry hold-down assembly rollers 42 can function as rotatable entry members such that the rotation corresponds to the linear movement of the workpiece W along the entry conveyor 12. The rotation of the rollers 42 is detected from the corresponding rotation of the shaft 48 by means of a conventional rotary encoder 67. As will be explained hereinafter, the encoder 67 functions as a feedback means responsive to the rotation of the entry hold-down assembly rollers 42.

The encoder 67 may be of the conventional type employing a light source, a rotatable etched glass disc carried on the shaft 48, and photocell, or the encoder 67 may be of any other suitable type for measuring the rotation of the shaft 48 and any partial rotation thereof. The detailed design and specific structure of the encoder forms no part of the present invention. The preferred form of the encoder 67 emits a pulse for each small, equal increment of rotation. Thus, the movement of the workpiece W for a specific linear distance along the conveyor while engaged with the rollers 42 corresponds to a specific number of pulses.

As best illustrated schematically in FIG. 4, the signal from the encoder 67 is transmitted to an entry conveyor control system or unit 68 which functions as a control means for controlling the operation of the entry and exit conveyors as will be explained in more detail hereinafter.

For control reasons explained hereinafter, it is desired to rotate the entry hold-down assembly rollers 42 by the entry conveyor motor 24 through the belt 54 when the entry hold-down assembly 38 is in the raised position. Means are provided for maintaining some tension on the belt 54 and taking up slack in the belt 54. Specifically, a tension sheave 70 is carried on the end of an arm 72 which is pivotally mounted to a conventional spring tensioner so as to bias the sheave 70 against the belt 54 (in the counterclockwise direction as viewed in FIG. 5). This takes up slack in the belt 54 and applies some tension to the belt 54 when the entry hold-down assembly 38 is at any position lower than the maximum elevation position illustrated in FIG. 5.

It is intended that when the entry hold-down assembly 38 is in a lowered position to bias the rollers 42 against the workpiece W, the driven entry conveyor rollers 20 will normally advance the workpiece W toward and into the shearing machine 10 with little or no slippage. Since the rotation of the hold-down roller shaft 48 is sensed by the rotary encoder 67 to measure the linear advancement of the workpiece W, it is also desired that the hold-down rollers 42, when engaged with the workpiece W, rotate in a manner that accuratly corresponds to the linear advancement of the workpiece W along the entry conveyor 12. To this end, it is necessary to avoid any slippage between the upper hold-down rollers 42 and the engaged workpiece W.

If there is no slippage between the lower rollers 20 and the workpiece W, then the upper rollers 42, being driven through the belt 54, will also rotate at the same angular velocity as the lower rollers 20 and will not slip relative to the workpiece W.

However, at times there could be some slippage between the lower rollers 20 and the workpiece W (e.g., as the workpiece W is slowed down by an obstruction on the conveyor). If the driven lower rollers 20 are slipping relative to the slowed workpiece, then it is desired that the upper rollers 42 (and the associated shafts 44 and 48) rotate only to the extent that they are caused to do so by the friction engagement of the rollers 42 with the workpiece W. To this end, the belt 54, sheaves 52, 58, 70, and the spring tensioner 76 are arranged to provide only a limited amount of static and dynamic friction between the belt 54 and the sheave 52 or the sheave 58 when the entry hold-down assembly 38 is lowered against the workpiece W. The maximum magnitude of the friction is low enough to permit slippage of the belt 54 at and above a predetermined maximum torque applied to any of the upper rollers 42. Thus, the belt 54 would slip on at least one of the sheaves 52 or 58 and not drive the upper rollers 42 which would rotate only in response to actual slower movement of the engaged workpiece W.

On the other hand, the linear speed of the workpiece W could be greater than the circumferential speed of the entry conveyor rollers 20 (as might occur if the workpiece W were rammed from behind by another workpiece or, as might occur if the workpiece W continued advancing under its own momentum after the rotation of the rollers 20 had been terminated). In such a situation, the greater speed of the workpiece W is also directly transmitted to the engaged entry hold-down assembly rollers 42, and the belt 54 will slip relative to the faster rotating rollers 42. Thus, the belt 54 and sheaves 52 and 58 function as a slippable torque-transmitting means for slipping relative to the upper rollers 42 at a predetermined maximum torque.

### The Exit Conveyor

With reference to FIGS. 3-8, the exit conveyor 14 includes a plurality of space-apart rollers 80 mounted on a suitable conveyor framework, the details of which form no part of the present invention. The rollers 80 are driven by a conventional electric servo motor (which is not visible in the figures and which would typically be mounted on the exit conveyor framework further downstream of the portion of the conveyor 14 illustrated in FIG. 6 (further toward the right as viewed in FIG. 6)). The motor rotates the rollers 80 in the exit conveyor 14 by means of gear drives 86 and shafts 82 journaled in bearings 84 mounted to the conveyor framework.

To accommodate the forces imposed by the shearing machine on the exit conveyor 14 during the shearing operation, the upstream end of the exit conveyor 14 adjacent the shearing machine is provided with a shock absorbing system and is adapted to accommodate some downward movement. Specifically, as best illustrated in FIGS. 2, 6, 7, and 8, the upstream end of the exit conveyor 14 is supported from the floor by a pneumatic cylinder-piston actuator 90 and is stabilized laterally by two connected, wide, stabilizing arms 92. Each arm 92 is provided with a pivot connection at each end.

Further, as best illustrated in FIG. 6, a universal joint 96 is employed to connect two of the exit conveyor drive shafts 82. Also, the sections of the exit conveyor framework are pivotally connected together adjacent the universal joint 96 by means of a bracket 98 (FIG. 6) on one conveyor section engaged with a shaft 100 on the adjacent conveyor section.

The upstream end of the exit conveyor 14 illustrated in FIG. 6 can thus pivot downwardly in response to a downward force transmitted to the conveyor 14 through the overlying section of the workpiece as the workpiece is sheared by the shearing machine 10. A controlled outflow orifice in the cylinder-piston actuator 90 absorbs the impact of the shearing force.

As best illustrated in FIG. 1a, the unloading stations $U_1$-$U_5$ increase in length along the exit conveyor 14 and accommodate increasing lengths of the sheared workpiece sections. The first unloading station $U_1$ is shown in more detail in FIGS. 3, 6, and 7. The unloading station $U_1$ includes a horizontally disposed support member 104 (FIG. 7) which is mounted to the framework of the exit conveyor 14. Pivotally mounted to each end of the member 104 is a pneumatic cylinder-piston actuator 106. The piston rod of each actuator 106 includes a receiving bracket 108 in which is journaled a shaft 110 that extends along the side of the exit conveyor 14. Each shaft 110 is supported by, but not connected with, two spaced-apart brackets 112 which are carried by the exit conveyor framework.

As best illustrated in FIG. 3, a plurality of spaced-apart rods 114 are mounted across the tops of the two shafts 110 in a ladder-like arrangement slightly below the passline on the rollers 80 (FIG. 7). The ladder-like arrangement of the rods 114 can be tilted toward either side of the exit conveyor 14 to dump or unload the sheared rebar sections. To this end, as best illustrated in FIG. 7, one of the actuators 106 may be extended while the other one is maintained in the normal, retracted position. This will cause the ladder-like assembly of rods 114 carried by the two shafts 110 to tilt and dump the sheared rebar section into the receiving or storage bin (not illustrated).

All of the remaining unloading stations U2-U5 have substantially the same structure, and operate in substantially the same way, as the first unloading station U1. However, the downstream spacing between the exit conveyor rollers 80 typically increases with increasing downstream distance, and the spacing between the loading station rods 114 also increases correspondingly so that the lengths of the downstream loading stations increase. The increasing lengths of the stations U1-U5 is illustrated in FIGS. 1a-1f. The longer downstream loading stations are typically employed to unload longer sheared sections of the workpiece.

The detailed design and specific structure of the unloading station mechanisms form no part of the present invention.

Exit Hold-Down Assembly

Mounted to the upstream end of the exit conveyor 14 is an exit hold-down assembly 120 which includes components that are substantially identical to those employed in the above-described entry hold-down assembly 38 and which function analogously. As best illustrated in FIG. 6, the exit hold-down assembly 120 includes a frame 124 which carries two spaced-apart upper rollers 126 which are preferably covered with polyurethane. Each roller 126 is carried on a driven shaft 128, and each driven shaft 128 is driven through a gear drive 130 by means of another driven shaft 132 which is journaled in a bearing 134 mounted to the exit hold-down assembly frame 124.

As with the entry hold-down assembly 38, the exit hold-down assembly 120 includes a slippable torque transmitting means which includes, as best illustrated in FIG. 6 and 7, a sheave 138 mounted to one end of the driven shaft 132, a belt 140 engaged with the sheave 138 and a sheave 142 which is mounted to the exit conveyor drive shaft 82 and which is also engaged with the belt 140. A tension sheave 146 is mounted to the end of an arm 148 which is pivotally mounted to a conventional spring tensioner 150 to bias the sheave 148 against the belt 140 (in the counterclockwise direction as viewed in FIG. 7). The tension sheave 146 takes up slack in the belt.

The exit hold-down assembly is mounted to, and above, the exit conveyor 14 on four shafts 133 which are each slidably received in a sleeve 135 that is mounted to the exit conveyor framework (FIG. 6). The lower distal end of each shaft 133 is mounted to a transverse member 136 that is connected to the cylinder of a pneumatic cylinder-piston actuator 137. The actuator piston rod has an end 139 connected to the exit conveyor framework. Thus, the exit hold-down assembly 120 can be raised and lowered by operation of the actuator 137 in the same manner that the above-described entry hold-down assembly 38 can be raised and lowered.

The exit hold-down assembly drive belt 140 operates in a manner analogous to the operation of the belt 54 associated with the above-described entry hold-down assembly 38. The exit hold-down assembly belt 140 slips at and above a predetermined maximum torque applied to any of the upper rollers 126. This ensures that the hold-down rollers 126, when engaged with the selected section of the workpiece on the exit conveyor 14, rotate in a manner that accurately corresponds to the linear advancement of the section along the conveyor 12. The belt 140 will slip whenever its speed does not correspond with the rotation of the upper rollers 126 as they are rotated in direct response to the movement of the engaged workpiece section.

Since the rollers 126 will rotate in response to movement of the engaged workpiece section, the rotation of the shaft 132 is measured to determine the position of the workpiece section on the exit conveyor. To this end, a rotary encoder 160 is provided on the exit hold-down assembly 120 at the end of the shaft 132 to sense its rotation. The encoder 160 may be of the same type as the encoder 67 described above with respect to the entry hold-down assembly 38. The signal from the encoder 160 is transmitted to the same control system or unit 68 which also receives the signal from the entry hold-down assembly encoder 67.

The Control System

The control system includes the control unit 68 which receives the signals from the rotary encoders 67 and 160. In addition, a photocell detector unit 162, comprising a light source and photocell, may be provided, as best illustrated in FIGS. 3, 6, and 7, on the exit conveyor 14 below the exit hold-down assembly 120 between the two exit conveyor rollers 80. The photocell detector unit 162 may be mounted to the sides of the exit conveyor 14 and detects the presence of the rebar section in the conveying path on the exit conveyor. The signal from the photocell detector unit 162 may be transmitted to the control unit 68, and this signal may be used for certain monitoring, control, or back-up (redundant) control functions as may be desired.

It is contemplated that the control unit 68 would be located at a central control station along with switches and controls for operating the equipment for loading the raw rebar stock onto the entry conveyor 12 and for unloading the sheared sections from the exit conveyor 14. In addition, the control station may be provided with a cathode ray tube screen or light emitting diode display to indicate the sheared rebar section length and quantity of the various sections. Controls for manual operation of the system would also be provided.

The control system components may be conventional, and the detailed design and specific structure of such components form no part of the present invention. Indeed, it is contemplated that the apparatus and method of the present invention may advantageously incorporate or employ a conventional, "off-the-shelf" numerical controller (or equivalent computer with appropriate axis control and input-output control circuit boards such as is typically used for X-axis and Y-axis control of a machine tool). These could be employed so that the "X-axis" control operates the entry conveyor 12 and so that the "Y-axis" control operates the exit conveyor 14. Using the linear interpolation mode in the controller, both axes would be programmed for the same dimension and speed so that the two separate conveyors could act as one where necessary through much of the operation cycle even though the two conveyors are mechanically independent. It is to be understood that, if a conventional numerical controller is employed, the system is not limited to control by the "X-axis" and "Y-axis" per se. Rather, any combination of axes may be used for the two conveyors. Preferably, the entry conveyor motor 22 and the exit conveyor motor are reversible so that the conveyors can be controlled in either direction to properly position the rebar thereon.

## Method of Operation

The apparatus of this invention may be operated to process workpieces in a novel and more efficient manner. The method of operation will next be described with respect to a particular example illustrated in FIGS. 1a-1f.

As best illustrated in FIG. 1a, a workpiece W, in the form of a raw stock length of rebar, is loaded by conventional means (not illustrated), laterally onto the entry conveyor 12 in the direction of arrows 15 in FIG. 1a. The raw stock rebar workpiece W has a length $L_T$ which is typically 60 ft. One such length of raw stock rebar W may be processed at a time. However, it is more efficient to process a plurality of such lengths of rebar W together. Typically, as many as twenty lengths or pieces of raw stock rebar W would be loaded onto the entry conveyor 12 at one time and would then be processed side-by-side in parallel. For ease of illustration, and for simplicity of description, the following discussion of the processing method will refer to only one length of raw stock rebar W with the understanding that the method may be applied to a plurality of such lengths of raw stock rebar W.

Initially, the squaring stops 30 and 32 at each end of the entry conveyor 12 are in the elevated position. The entry hold-down assembly 38 and the exit hold-down assembly 120 are also elevated. If an automatic control system is employed, the automatic control system would not yet be operating.

Next, the entry conveyor 12 is manually actuated and operated to advance the raw stock rebar W against the downstream squaring stop member 32 (FIG. 1c), and the entry conveyor 12 is then manually stopped.

The stop member 32 is a fixed, known distance upstream of the center line of the shearing machine shear blades where the rebar W is ultimately sheared. Thus, the location of the stop member 32 may be taken as an initial "zero point" in the system, and all measurements with respect to downstream advancement of the rebar W can be taken from this point.

Once the rebar W has been positioned against the raised stop member 32 with the entry conveyor 12 stopped, the entry hold-down assembly 38 can be lowered to engage the rebar W and the stop member 32 can be lowered prior to starting up the entry conveyor 12.

When an automatic control system is employed, then the automatic control system is turned on at this point. In practice, when an automatic control system is employed, the control system "zero point" may be set at the actual center line of the shearing machine shear blades, and the distance upstream between the center line of the shear blades and the stop member 32 is preset in the automatic control system as a "negative" distance.

The automatic control system initially "zeroes out" (cancels any previous workpiece advancement distance measurements and previous sequence steps) and automatically starts the entry conveyor 12. The automatic control system would also typically be programmed to automatically lower both the entry hold-down assembly 38 and stop member 32.

It is desired to have the exit conveyor 14 operating before it actually receives the downstream end of the rebar W. This gives the downstream conveyor 14 time to reach its operating speed to match the operating speed of the upstream conveyor 12 and to facilitate the conveying of the rebar W. To this end, the automatic control system also functions to start the exit conveyor 14 at the same time it starts the entry conveyor 12.

Initially, the exit conveyor 14 runs with the exit hold-down assembly 120 in the elevated position. Operation of the exit conveyor 14 functions, through the belt 140 (FIGS. 6 and 7) to rotate the elevated exit hold-down assembly upper rollers 126. The exit rotary encoder 160 thus produces a signal which is transmitted to the control unit 68 along with the signal from the entry encoder 67. When a conventional "off-the-shelf" numerical controller is employed in the control unit or system 68 to operate the exit conveyor 14 using the numerical controller "Y-axis," the transmission of the signal from the exit rotary encoder 160 to the numerical controller allows the controller to regulate the speed and position of the exit conveyor 14. This type of motion feedback is necessary in a conventional numerical control system to avoid numerical control errors.

As the leading end of the rebar W extends out of the shearing machine 10 and onto the downstream exit conveyor 14, the control unit 68 registers the advancement (as transmitted by the rotary encoder 67). The control unit 68 then effects lowering of the exit hold-down assembly 120 to engage the projecting end of the rebar W. The rebar W is thus conveyed by both conveyors 12 and 14. Alternatively, if the photocell detector unit 162 (FIG. 3) is employed, it detects the presence of the rebar W on the exit conveyor 14. The signal from the photocell detector unit 162 could then be processed by the control unit 68 to lower the holddown assembly 120.

The entry conveyor 12 advances the rebar W into the shearing machine 10 the desired distance. This is determined by the control unit 68 which receives the advancing distance measurement from the rotary encoder 67 in response to rotation of the upper rollers 42 in the entry hold-down assembly 38. The control unit 68 is programmed to include the length data for the various sections to be sheared from the raw stock rebar W. Such data is typically determined by a conventional "nesting" computer program, and the data is loaded by conventional means into the control unit 68. The control system compares the accumulated advancing length measurement (as transmitted by the entry encoder 67) to the desired length of the first section to be sheared from the rebar W.

FIG. 1d illustrates a first section $S_1$ of length $L_1$ extending from the shear line of the shearing machine 10 onto the exit conveyor 14. At this point, when the measured length $L_1$ equals the desired selected length as determined by the control system, the control system simultaneously shuts down the entry conveyor 12 and the exit conveyor 14.

The control system 68 then automatically operates the shearing machine to shear the first section $S_1$ from the rebar W.

Next, the control system starts up the exit conveyor 14 to advance the first section $S_1$ down the exit conveyor 14. The entry conveyor 12 could also be simultaneously operated if there was to be no spacing between the sheared first section $S_1$ and the next section to be sheared from the rebar W. However, the first section $S_1$ typically must be conveyed downstream to an appropriate one of the unloading stations $U_1$-$U_5$, and that unloading station is not usually in direct end-to-end relationship with the designated unloading station for the next sheared section. Therefore, the control system will typically keep the entry conveyor 12 turned off as the exit conveyor 14 begins to convey the first section $S_1$ downstream.

As the exit conveyor 14 conveys the first section $S_1$ away from the shearing machine 10, the exit hold-down assembly 120 remains in the lowered position to force the section $S_1$ against the exit conveyor 14. This ensures a more positive contact between the section $S_1$ and the rollers 80 of the exit conveyor 14, and this reduces the possibility of slippage between the section $S_1$ and the rollers 80. This also helps to more rapidly bring the section $S_1$ up to the design conveying speed on the exit conveyor 14.

The advancement of the section $S_1$ along the exit conveyor 14 is, of course, recorded by the control unit 68 in response to the exit encoder 160. As the sheared section $S_1$ begins to move away from the shearing machine 10 on the exit conveyor 14, its advancing movement, and hence, its position, can be accurately measured even if there is some slippage, for whatever reason, between the exit conveyor rollers 80 and the section $S_1$. Specifically, it is to be recalled that the exit encoder 160 is driven by the shaft 132 through the belt 140. Further, it is to be recalled that the belt 140 will slip at a predetermined torque so as not to overcome the static and/or dynamic friction between the exit hold-down assembly upper rollers 126 and the section $S_1$. Thus, the actual movement of the section $S_1$, as transmitted through the upper rollers 126, will preferentially drive the encoder 160, and the belt 140 will slip if the exit conveyor is operating at a faster or slower rate. Thus, the actual position of the section $S_1$ as it leaves the shearing machine 10 will be accurately measured.

As the trailing (upstream) end of the section $S_1$ enters the exit hold-down assembly 120, the control unit 68 continues to register the advancement of the section $S_1$ (as transmitted by the rotary encoder 160). The control unit 68 then causes the exit hold-down assembly 120 to be elevated after the section $S_1$ has been conveyed beyond the hold-down assembly 120. Alternatively, if the photocell detector unit 162 (FIGS. 3 and 7) is employed, it detects the absence of the section $S_1$. In response to this, the control unit 68 would cause the exit hold-down assembly 120 to be elevated.

Even though the exit hold-down assembly 120 is then raised, the exit encoder 160 continues to transmit a signal in response to rotation of the shaft 132 which is driven by the belt 140 from the downstream conveyor 14. Where a conventional machine tool numerical controller is employed, this continued signal from the exit encoder 160 prevents the numerical controller from shutting down the conveyor 14.

It is to be recognized that the first section $S_1$, as it continues being conveyed down the exit conveyor 14, is no longer urged against the conveyor rollers 80. Thus, there is some potential for slippage between the conveyor rollers 80 and the section $S_1$. This slippage will, of course, not be measured by the encoder 167 which is now responsive to the exit conveyor drive per se (through belt 140) rather than directly responsive to the movement of the section $S_1$ per se.

Since the section $S_1$ is being advanced at the maximum operating speed of the exit conveyor 14 by the time the section $S_1$ has left the exit hold-down assembly 120, there is little likelihood that there will be substantial slippage between the section $S_1$ and the exit conveyor rollers 80. However, even if there were some slippage, the exact position of the section $S_1$ on the exit conveyor 14 is not extremely critical at this point for two reasons. First, the critical shearing operation has already occurred. Second, none of the downstream unloading stations $U_1$-$U_5$ requires that the sheared section $S_1$ be located on the station with extreme precision in order for the station to effectively operate and properly unload the section $S_1$.

The nature of the continued operation of the conveyors by the control unit 68 depends upon the lengths of the remaining various sections that are to be sheared, upon the shearing order which has been determined (e.g., by a standard "nesting" computer program), and upon the actual locations and spacings of the downstream unloading stations $U_1$-$U_5$. In the example illustrated in FIGS. 1a-1f, the second section to be sheared is designated $S_2$ - (see FIG. 1f in particular). The second section $S_2$ has a length $L_2$ which is greater than the length $L_1$ of the first section $S_1$. In this situation, a preferred sequence for continued operation of the system is to convey the first section $S_1$ to a point on the exit conveyor 14 where the downstream (leading) end of the section $S_1$ is a distance $L_2$ from its ultimate unloading position (e.g., at unloading station $U_5$ as illustrated in FIG. 1e). Of course, it is understood that the correct unloading station $U_1$-$U_5$ for each section to be sheared has been determined (e.g., by the conventional "nesting" computer program) and preset in the control unit 68.

When the first section $S_1$ has reached the point on the exit conveyor 14 at the designated distance $L_2$ upstream of the ultimate unloading station $U_5$ - (FIG. 1e), the control system 68 starts the entry conveyor 12. It is to be realized that the entry hold-down assembly 38 had previously been in the lowered position engaged with the trailing portion of the raw stock rebar W and has remained in that engaging position. In the preferred handling process, the exit conveyor 14 continues to operate, simultaneously with the entry conveyor 12, so that as the raw stock rebar W is conveyed a distance $L_2$ past the shear line, the sheared first section $S_1$ is likewise conveyed a distance $L_2$ to the proper location at the unloading station $U_5$. As the entry conveyor 12 advances the remaining length of the rebar W into the shearing machine 10, the control system 68 again records the advancement of the rebar W in response to the signal from the entry rotary encoder 67.

As the previously cut leading end of the rebar W passes out of the shearing machine 10 and enters the exit conveyor 14, the exit hold-down assembly 120 is again lowered (in response to the advancement distance as transmitted by the exit encoder 160, or alternatively, in response to the signal from the photocell detector 162 if that is employed). Both conveyors 12 and 14 thus function to advance the rebar W until the next pre-set section $S_2$ is properly positioned for shearing.

Next, the control unit 68 stops both conveyors, operates the shearing machine 10 to shear the second section $S_2$ from the raw stock rebar W, and operates the unloading station $U_5$ to unload the section $S_1$ into the appropriate storage bin (not illustrated) on either side of the exit conveyor 14. These actions preferably occur substantially simultaneously. The section $S_1$ can be unloaded laterally to either side of the exit conveyor 14 in the direction of the arrows indicated by the reference numerals 170 in FIG. 1f.

The basic sequence of operation can then be repeated until the entire length of the raw stock rebar W is sheared into sections of the desired lengths as previously determined. In order to locate the sections at the proper unloading stations $U_1$-$U_5$, appropriate modifications are made by the control unit 68 depending upon the lengths of the sections and the selected optimum arrangement of the sections in the raw stock rebar W.

As the raw stock rebar W advances to the downstream end of the entry conveyor 12, the control unit 68 compares the linear advancement of the rebar W with the original length $L_T$ of the rebar W. The control unit 68 elevates the entry hold-down assembly 38 when the upstream (trailing end) of the rebar W reaches the entry hold-down assembly 38. The control unit 68 effects raising of the hold-down assembly 38 preparatory to receiving the next length of raw stock rebar.

Even though the entry hold-down assembly 38 is elevated, the entry conveyor 12 continues to drive the entry encoder 67 through the belt 54 (FIGS. 4 and 5). The control unit 68 thus continues to receive the signal from the entry encoder 67. If the control unit 68 includes a conventional machine tool numerical controller, the entry encoder signal prevents the controller from shutting down. Thus, the entry conveyor 12 continues to assist in conveying the short trailing end portion of the rebar W even though the hold-down assembly 38 is no longer engaged with the rebar W. Of course, the downstream end of the rebar is also being conveyed by the exit conveyor 14 against which it is biased by the exit hold-down assembly 120.

When the last section of the raw stock rebar W is conveyed from the shearing machine 10, the control unit 68 initiates no more shear commands during the cycle. The exit conveyor 14 conveys the last section to the appropriate unloading station from which it is unloaded. The control system then terminates the automatic operation of the conveyors. The next raw stock rebar or rebars may then be loaded onto the stopped entry conveyor 12 and appropriately conveyed forward and squared against the squaring stop member 32 prior to initiation of the sequence for automatically processing the new raw stock rebar.

It is seen that the invention and method of the present invention eliminates the use of multiple, mechanical stops in the exit conveyor system. It also eliminates the need to provide complex and costly mechanisms for moving the entire shearing machine and/or conveyors relative to the rebar while still providing precise shear control.

Additionally, it has been shown how the invention permits an automatic, servo control system to employ, if desired, conventional, "off-the-shelf" numerical controllers of the type used for controlling conventional machine tools. Linear interpolation is conventionally employed in the typical numerically controlled machine tool for controlling the coordinated movement of two or more axes in a numerical control system (typically X and Y axes or X, Y, and Z axes). These axes are typically used to move a workpiece relative to a stationary tool or to move a tool relative to a stationary workpiece. For example, with a workpiece that is a flat sheet of material, the length of the material may be represented by the X axis, and the width of the material may be represented by the Y axis. To move a tool across the material in a straight line from a first point to a second point, it is necessary to coordinate the start, acceleration, maximum speed, deceleration, and stop of the X and Y axes movements. The linear interpolation mode in the numerical control accomplishes this. The movements can be coordinated even though the distance traveled and speed along the axes are not equal.

In contrast to the above-described conventional operation, the present invention permits linear interpolation in a conventional numerical control to accomplish something quite different. With the present invention, two numerically controlled axes move material in the same direction.

Specifically, the entry (X axis) conveyor and exit (Y axis) conveyor can be instructed by the numerical control to start moving simultaneously. (It should be noted, however, that the entry conveyor (X axis) is the only axis initially used to move the material toward the shearing machine.) Position and speed information is fed back independently to each axis (by the respective encoders) to assure that the movements of the two axes are coordinated.

As the leading edge of the rebar section moves from the entry conveyor through the shearing machine and onto the exit conveyor, the rebar load is shared by both the X and Y axes.

When the trailing end of the raw stock rebar travels forward to the point where it no longer contacts the entry conveyor, the exit conveyor (Y-axis) takes the full load of the material. As the rebar material approaches the end of it's programmed move, both the entry (X-axis) conveyor and exit (Y-axis) conveyor decelerate to a stop in perfect syncronization. In this manner, two mechanically separate assemblies accurately measure the movement of a workpiece as it travels from the first assembly to the second.

This novel method permits the use and coordination of entry and exit conveyors which are mechanically separate. This eliminates the need for a complicated mechanical linkage tying the two conveyors together. It also provides the capability for independently moving the conveyors at different speeds or directions at the same time if the application requires it--without changing the mechanical configuration.

Finally, the invention can advantageously be operated by means of a control system that is easily integrated with programmed data from conventional rebar "nesting" computer programs and with personal computer hardware to provide a more user-friendly interface.

It will be readily observed from the foregoing detailed description of the invention and from the illustrated embodiment thereof that numerous variations and modifications may be effected without departing from the true spirit and scope of the novel concepts or principles of this invention.

## Claims

1. Workpiece handling apparatus for use with a shearing machine having shearing means for shearing a selected length section from said workpiece:

an entry conveyor operatively located at the inlet of said shearing machine for feeding said workpiece into said shearing machine;

an exit conveyor operatively located at the outlet of said shearing machine for feeding said workpiece selected section out of said shearing machine;

a rotatable entry member associated with said entry conveyor for engaging said workpiece and being rotated by the movement of said workpiece on said entry conveyor;

entry feed back means responsive to the rotation of said rotatable entry member for registering the position of said workpiece;

a rotatable exit member associated with said exit conveyor for engaging said workpiece selected section and being rotated by the movement of said workpiece selected section on said exit conveyor;

exit feedback means responsive to the rotation of said rotatable exit member for registering the position of said workpiece selected section; and

conveyor control means responsive to said feedback means for controlling the operation of said entry and exit conveyors to position said workpiece relative to said shearing machine and to position said selected section along said exit conveyor independently of the remaining length of said workpiece after shearing.

2. The apparatus in accordance with claim 1 further including entry actuating means for urging said rotatable entry member against said workpiece and exit actuating means for urging said rotatable exit member against said workpiece selected section.

3. The apparatus in accordance with claim 2 in which said entry actuating means includes means for moving said rotatable entry member between a disengaged position spaced from said workpiece and an engaged position biased against said workpiece to urge said workpiece against said entry conveyor.

4. The apparatus in accordance with claim 2 in which said exit actuating means includes means for moving said rotatable exit member between a disengaged position spaced from said selected section and an engaged position biased against said selected section to urge said selected section against said exit conveyor.

5. The apparatus in accordance with claim 3;

in which said entry conveyor includes a driven entry conveyor roller for engaging the bottom of said workpiece to feed said workpiece;

in which said entry conveyor further includes conveyor drive means for rotating said driven entry conveyor roller; and

in which said apparatus further includes slippable torque transmitting means operatively connected with said conveyor drive means for rotating said rotatable entry member and for slipping relative to said rotatable entry member at a predetermined maximum torque applied to said rotatable entry member.

6. The apparatus in accordance with claim 5 in which said rotatable entry member is a roller having a diameter equal to the diameter of said driven entry conveyor roller and in which said slippable torque tansmitting means includes means for rotating said rotatable entry member roller at the same angular velocity as said driven entry conveyor roller when said rotatable entry member is in said disengaged position.

7. The apparatus in accordance with claim 4 in which said exit conveyor includes a driven exit conveyor roller for engaging the bottom of said selected section of said workpiece to feed said selected section;

in which said exit conveyor further includes conveyor drive means for rotating said driven exit conveyor roller; and

in which said apparatus further includes slippable torque transmitting means operatively connected with said conveyor drive means for rotating said rotatable exit member and for slipping relative to said rotatable exit member at a predetermined maximum torque applied to said rotatable exit member.

9. The apparatus in accordance with claim 7 in which said rotatable exit member is a roller having a diameter equal to the diameter of said driven exit conveyor roller and in which said slippable torque transmitting means includes means for rotating said rotatable exit member roller at the same angular velocity as said driven exit conveyor roller when said rotatable exit member is in said disengaged position.

9. Workpiece handling apparatus for use with a shearing machine having shearing means for shearing a selected length section from said workpiece:

an entry conveyor operatively located at the inlet of said shearing machine and an exit conveyor operatively located at the outlet of said shearing machine, each said entry and exit conveyor including a conveyor roller for engaging said workpiece and including conveyor drive means for rotating said conveyor rollers;

an upper entry roller mounted over said entry conveyor and an upper exit roller mounted over said exit conveyor;

actuating means for moving said upper entry and exit rollers between (1) a lowered position for engaging said workpiece on said entry and exit conveyors, respectively, and (2) an elevated, disengaged position;

slippable torque-transmitting means operatively connected with said conveyor drive means for rotating said upper entry and exit rollers and for slipping relative to said upper entry and exit rollers at a predetermined maximum torque applied to said upper entry and exit rollers;

feedback means responsive to the rotation of said upper entry and exit rollers for registering the position of said workpiece and said selected section; and

control means responsive to said feedback means for controlling the operation of ssaid entry and exit conveyors to position said workpiece relative to said shearing machine and to position said selected section along said exit conveyor independently of the remaining length of said workpiece after shearing.

10. A method for handling a workpiece for shearing selected length sections from the workpiece in a shearing machine and for handling the sheared sections, said method comprising the steps of:

(1) advancing said workpiece along a path to an initial first position;

(2) advancing said workpiece beyond said initial first position and measuring the advancement from said initial first position;

(3) in response to said workpiece position measurement, terminating step (2) with the workpiece at a second position to locate a first said selected section in said shearing machine for being sheared from said workpiece;

(4) shearing said first section from said workpiece;

(5) advancing said first section from said shearing machine and measuring the advancement of said first section from said initial position;

(6) in response to the measurement of the advancement of said first section to a pre-selected position downstream of said shearing machine, advancing said workpiece further beyond said second position and measuring the advancement from said initial position while simultaneously continuing to advance said first section beyond said pre-selected position;

(7) in response to the measurement of the advancement of said workpiece in step (6), terminating step (6) with the workpiece at a third position to locate a second section in said shearing machine for being sheared from said workpiece;

(8) shearing said second section from said workpiece; and

(9) simultaneously with step (8), removing said first section from said path.

11. The method in accordance with claim 10 in which said step (1) includes conveying said workpiece on an entry conveyor upstream of said shearing machine; and

in which said step (5) includes conveying said first selected section on an exit conveyor downstream of said shearing machine.

12. The method in accordance with claim 10 in which said step (2) includes engaging said workpiece with a roller and measuring the rotation of the roller; and

in which step (5) includes engaging said first selected section with a roller and measuring the rotation of the roller.

13. The method in accordance with claim 11 further including the step of providing a numerical controller having an X-axis control and a Y-axis control;

further including the step of operating said entry conveyor from the numerical controller X-axis control and operating said entry conveyor from the numerical controller Y-axis control; and

further including the step of feeding back to said numerical controller said measurements of the advancement of said workpiece and said selected sections.

Neu eingereicht / New
Nouvellement dépo

Fig. 1a
Fig. 1b
Fig. 1c
Fig. 1d
Fig. 1e
Fig. 1f

FIG.3.

FIG.2.

EP 0 326 001 A2

Neu eingereicht / Newl
Nouvellement dépc

_FIG_6_

EP 0 326 001 A2

_FIG_7_

_FIG_8_